# EUROPEAN PATENT APPLICATION

(11) **EP 2 484 566 A1**
(43) Date of publication of application: **08.08.2012**
(21) Application number: 11153610.8
(22) Date of filing: 08.02.2011
(51) Int. Cl.: B60T 7/22, B60W 30/08

(54) **Brake assist system**

(71) Applicant: Volvo Car Corporation, 40531 Göteborg (SE)
(72) Inventor: Brännström, Mattias, 41481, Göteborg (SE); Helgesson, Linus, 41501, Göteborg (SE); Christiansson, Mikael, 44330, Lerum (SE)

(57) **Abstract**

A method for automatic braking of a vehicle (A) in order to avoid collision with road users (B) in adjacent lanes comprises monitoring adjacent lanes of a road for detecting the relative approach of road users in said adjacent lanes to said vehicle, and providing a signal indicative thereof, detecting a left or right hand turn of the vehicle and providing a signal indicative thereof, calculating, in response to said signals, if a collision with an approaching road user is imminent, and providing a signal indicative thereof, and activating, in response to the signal that a collision with the approaching road user is imminent, the brakes of the vehicle such that the vehicle can pass behind said road user, the vehicle is brought to a complete stop to avoid a collision or the collision is mitigated. The method is thereby efficient and reliable. A simple brake assist system used at this method comprises a monitoring means (1), a detecting means (4), a calculating means (2) and a control means (6) for performing said steps (Fig. 1).

## Description

### TECHNICAL FIELD

The present invention relates to a method for assisting the driver of a vehicle by automatically braking the vehicle in order to avoid collision with road users in adjacent lanes. The present invention also relates to a brake assist system for use during this method.

### BACKGROUND OF THE INVENTION

Collisions at intersections are common in city traffic and often result in serious injuries and/or high repair costs. One common type of intersection is the Left Turn Across Path/Same Direction (LTAP/SD) scenario, where a vehicle is making a left or right turn while being overtaken by another road user in an adjacent lane. Said road user can be represented by, e.g. a bicycle, a moped, a motorcycle, a car or a truck.

Several systems for assisting drivers in avoiding collisions with road users in adjacent lanes have previously been proposed. The proposed solutions include systems for informing/-/warning the driver or systems for steering the vehicle back into the original lane, either by applying a torque to the steering wheel or by using differential braking to steer the vehicle. A natural extension to these systems would be to inform/warn the driver or to automatically steer the vehicle back into the original lane if it is detected that the driver has initiated a left or right turn while being overtaken by another road user. However, it surprisingly turns out that when applying previously proposed solutions to LTAP//SD-scenarios, it is very difficult to construct a system that can warn the driver in due time or that can steer the vehicle back into the original lane, without disturbing the driver with unnecessary warnings or steering interventions in normal traffic situations. When studying previously proposed solutions in more detail, it can be observed that the difficulties in applying these systems to LTAP/SD-scenarios are due to the fact that the driver of the vehicle often is using a large steering wheel angle while turning. As a result of the large steering wheel angle, the heading angle of the vehicle changes quickly. The combination of a large steering angle and a significant change of the heading angle makes it difficult to steer the vehicle back into the original lane to avoid a collision. Additionally, it is also difficult to warn the driver in time, since the situation rapidly may become very critical. Similar problems with previously proposed solutions arise in lane change manoeuvres at low speed. Clearly, there is a need for a complementary solution that effectively can assist drivers in avoiding collisions in these situations, without disturbing the driver with unnecessary warnings or interventions.

Examples of prior art solutions to avoid collisions by warning the driver of a vehicle that is positioned in the blind spot and by steering the vehicle back into the original lane in different ways, are found in e.g. WO 2004/021546 A2, CN 201115290 Y, US 2003/0141762 A1, US 2008/0055114 A1 and US 2009/0096634 A1.

### SUMMARY OF THE INVENTION

The primary object of the present invention is to assist a driver of a vehicle in avoiding or mitigating collisions with road users in adjacent lanes in situations where the driver is making a left or right turn or a lane change at low speed while there is another road user present in an adjacent lane. The collision is avoided by applying the brakes just enough to either let the vehicle pass behind the road user overtaking the vehicle or to bring the vehicle to a complete stop such that the road user in the adjacent lane can pass without colliding with the vehicle. To avoid unnecessary braking, the brakes are applied only when it is assessed that the driver cannot avoid a collision by a steering manoeuvre and heavy braking is required to avoid a collision.

It is a secondary object of the present invention to assist drivers that are performing a left or right turn in avoiding collisions with road users in adjacent lanes while said road users are overtaking said turning vehicle.

It is a further object of the present invention to assist drivers that are performing a left or right turn in avoiding collisions with oncoming road users in adjacent lanes (Left Turn Across Path/Opposite Direction, LTAP/OD-scenarios).

The velocity of the vehicle is usually low when the vehicle is turning and thus, the stopping distance is short. The short stopping distance makes brake interventions very efficient countermeasures for avoiding collisions.

Accordingly, the above object is achieved according to the present invention by presenting a method comprising the steps of monitoring adjacent lanes of a road for detecting the relative approach of road users in said adjacent lanes to said vehicle, and providing a signal indicative thereof; detecting a left or right hand turn of the vehicle and providing a signal indicative thereof; calculating, in response to said signals, if a collision with an approaching road user is imminent and providing a signal indicative thereof; and activating, in response to the signal that a collision with the approaching road user is imminent, the brakes of the vehicle such that the vehicle can pass behind said road user or such that the vehicle is brought to a complete stop to prevent a collision or the collision is mitigated.

The object mentioned above is also achieved according to the present invention by providing a brake assist system, said brake assist system comprising a monitoring means which is configured for monitoring adjacent lanes of a road for detecting the relative approach of road users in said adjacent lanes to said vehicle, and providing a signal indicative thereof; a detecting means which is configured for detecting a left or right hand turn of the vehicle and providing a signal indicative thereof; a calculating means which is operatively coupled to said monitoring means and said detecting means for calculating, in response to said signals from said monitoring means and said detecting means, if a collision with an approaching road user is imminent, and providing a signal indicative thereof; and a control means which is operatively connected to said calculating means for activating, in response to the signal from said calculating means that a collision with the approaching road user is imminent, the brakes of the vehicle such that the vehicle can pass behind said road user or such that the vehicle is brought to a complete stop to avoid a collision or the collision is mitigated.

Thus, the method and brake assist system of the present invention render it possible to efficiently and in a simple way control the vehicle by automatically braking the vehicle in situations when there is no other option in order to avoid, or at least mitigate, a collision.

### BRIEF DESCRIPTION OF THE DRAWINGS

The present invention will be further described below by way of example only and with reference to the accompanying drawings, in which
Fig. 1 is a schematic view of a vehicle provided with a simple embodiment of a brake assist system according to the invention; and
Fig. 2-5 schematically illustrate situations where a brake assist system according to the invention is activated.

### DETAILED DESCRIPTION OF PREFERRED EMBODIMENTS

As stated above, the present invention aims, inter alia, to reduce the problem of vehicles colliding because an overtaking or an oncoming vehicle drives into a vehicle making a left or right turn or into a vehicle changing lane, particularly changing lane at a low speed. The present invention solves this problem by applying to the turning or lane-changing vehicle an automatic braking action when a collision with the overtaking vehicle is imminent.

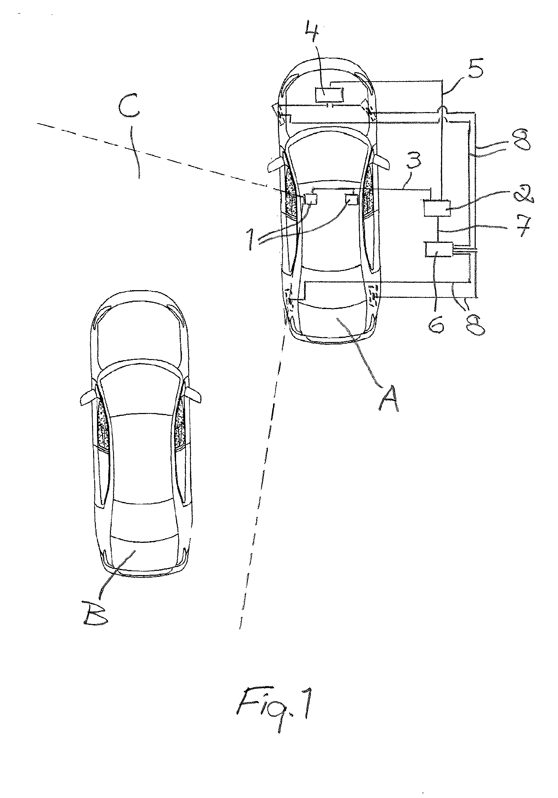

The brake assist system for automatic braking of a vehicle A provided therewith, comprises, as illustrated in Fig. 1, a monitoring means 1. This monitoring means 1 is configured for monitoring adjacent lanes of the road, primarily adjacent lanes behind and beside the vehicle A, but secondly also in front of the vehicle, for detecting the relative approach of road users B in said adjacent lanes to the vehicle, and for detecting road users driving in the same direction as well as in the opposite direction. Accordingly, the monitoring means 1 is configured for providing a signal indicative of the presence of an overtaking road user B as well as of road users which approach the vehicle A in other ways or which are approached by the vehicle, e.g. overtaken thereby or approached by a change of lane of said vehicle and/or of a road user being overtaken. This (first) signal is transmitted to a calculating means 2 through a line 3, as illustrated, or is transmitted wirelessly. The calculating means 2 also forms part of the brake assist system according to the present invention and will be further described below. Examples of other road users B are cars, motorcycles, lorries, mopeds, bicycles, pedestrians, horses etc.. When detecting another road user B, the detection signal to the monitoring means 1 and accordingly, the signal provided by the monitoring means to the calculating means 2, may of course also contain information about e.g. the type, position, speed and acceleration of the other road user as well as information about its direction of movement and size. This information may be readily available if the monitoring means 1 is configured for wireless communication with other road users B.

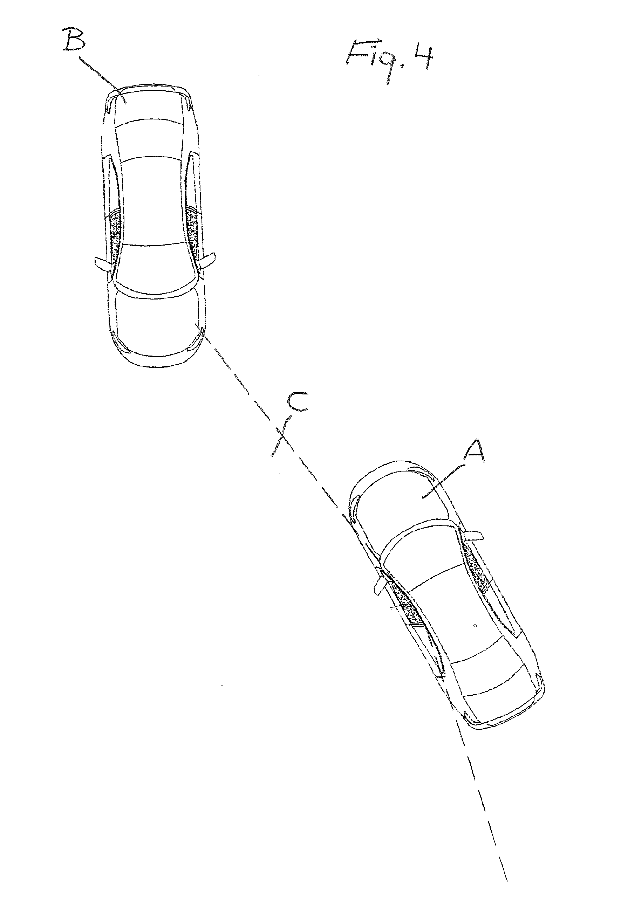

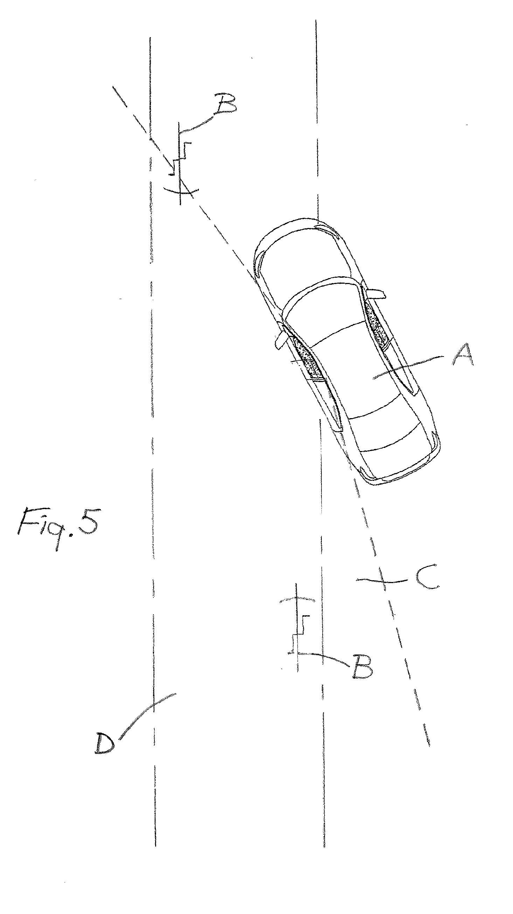

The monitoring means 1 may comprise at least one sensor utilizing electromagnetic radiation, i.e. it may be e.g. a radar-operated sensor or an infrared sensor. It may also comprise at least one camera. However, the monitoring means 1 may comprise any other number and suitable type of sensor or scanning equipment for the intended purpose or be configured, as mentioned above, for wireless communication with other road users B. If already present in the vehicle A, it is possible to configure in-vehicle sensors such as blind-spot sensors for the above-mentioned monitoring and detecting functions. There is normally at least one such sensor on each side of the vehicle A, as in the illustrated embodiment, and their range is generally about 30 m. The monitoring area C; C1 of the sensor on the left side of the vehicle A is shown with broken lines in Fig. 1-3 and 5. The monitoring area C; C2 of a forwardly directed sensor, e.g. a camera, is shown in Fig. 4 and 5.

The brake assist system according to the present invention further comprises a detecting means 4. The detecting means 4 is configured for detecting a left or right hand turn of the vehicle A and providing a (second) signal indicative thereof. The detecting means 4 may comprise any suitable type of sensor for the intended purpose. Accordingly, the detecting means 4 may comprise e.g. at least one sensor which is configured for sensing steering wheel movements and/or, as in the illustrated embodiment, at least one sensor for sensing turning of one or both front wheel. It may also comprise at least one gyro device. It is in this connection important to emphasize that the detecting means 4 should be configured to immediately detect any initiation of a left or right hand turn, such that the reaction time of the brake assist system is as short as possible. The signal from the detecting means 4 to the calculating means 2 is transmitted through a line 5, as illustrated, or is transmitted wirelessly.

The calculating means 2 of the brake assist system according to the invention is, as indicated, operatively coupled to the monitoring means 1 and the detecting means 4 for calculating, in response to the (first and second) signals from the monitoring means and the detecting means, if a collision with an approaching road user B is imminent, and providing a (third) signal indicative thereof. By imminent is here meant that a collision can not be avoided simply by steering the vehicle A away from the approaching road user B, i.e. when the (third) signal is generated by the calculating means 2, the collision can not be avoided by a steering manoeuvre. A signal that a collision with the approaching road user B is imminent, is transferred to a control means 6 through a line 7, as illustrated, or is transmitted wirelessly. Based on the configuration of the calculating means, a signal that a collision with the approaching road user B is not yet imminent, i.e. can still be avoided by e.g. a steering manoeuvre, may also be generated. This signal may also be transferred to the control means 6, but the control means should then of course be configured such that such a signal will have no effect on the function thereof. If and when it is calculated that a collision with an approaching road user B is imminent, the calculating means 2 may further be configured for estimating the extent of activation of the brakes of the vehicle A and/or which brakes shall be activated, and providing a signal indicative thereof. This signal may be a separate signal or may form part of the third signal from the calculating means 2. The threat assessment made by the calculating means 2 in order to determine whether a collision with an approaching road user B is imminent or not and how a braking action shall be performed in order to avoid, or mitigate, a collision, can be based on a suitable algorithm. The calculating means 2 may be a computer of a suitable type or comprise any other means for the intended purpose.

Finally, in the illustrated embodiment of the brake assist system according to the invention, the brake assist system comprises the above-mentioned control means 6. This control means 6 is, as indicated, operatively connected to the calculating means 2 for activating, in response to the (third) signal from the calculating means that a collision with the approaching road user B is imminent, the brakes of the vehicle A such that the vehicle can change lane and pass behind said road user, the vehicle is brought to a complete stop to prevent a collision or, if a collision can not be prevented, the collision is mitigated. The control means 6 is further configured for controlling the extent of activation of the brakes of the vehicle A, based on the signal from the calculating means 2. The control means 6 may be a computer of a suitable type or comprise any other means for the intended purpose, i.e. being capable of selectively activating all or some of the brakes or brake systems of the vehicle A, e.g. activating the brake of at least one wheel on the left side of the vehicle and the brake of at least one wheel on the right side of the vehicle, and controlling the extent of activation thereof. Which brakes to be activated may be based on information in a separate signal from the calculating means 2 or may form part of the third signal from said calculating means. As indicated above, the control means 6 may further be configured for determining, in case the signal received from the calculating means 2 can indicate either that a collision with an approaching road user B is imminent or that a collision with an approaching road user is not imminent, if the signal can be disregarded or not. In the illustrated embodiment, the control means 6 activates the brakes of the wheels of the vehicle A through lines 8, but activation may alternatively be performed wirelessly.

It will be evident to a skilled person that the brake assist system according to the present invention can be modified and altered within the scope of the subsequent claims without departing from the idea and purpose of the invention. Thus, the monitoring means 1 of the brake assist system described above may e.g. be supplemented with additional sensors which can be mounted in strategic positions on the vehicle. The detecting means 4 of the brake assist system described above may also be supplemented with additional sensors detecting or sensing other or more than one parameter of a left or right hand turn of the vehicle. The brake assist system may form part of or be combined with driver support systems that actively assist drivers both in normal traffic conditions as well as in hazardous traffic situations, or form part of or be combined with other collision avoidance systems which aim at assisting drivers in near crash situations where time is very critical and therefore may act autonomously.

Accordingly, as already indicated above, the sensors of the monitoring means 1 of the brake assist system described above may e.g. be configured also for monitoring adjacent lanes of a road in front of the vehicle A for detecting the relative approach of other road users B to said vehicle, and providing a (first) signal indicative thereof, or the monitoring means may be supplemented with forward-directed sensors or combined therewith. Thereby, the calculating means 2 can determine if the brakes have to be applied and the control means 6 eventually activate the brakes in order to prevent the vehicle A from having a frontal collision with an oncoming road user B.

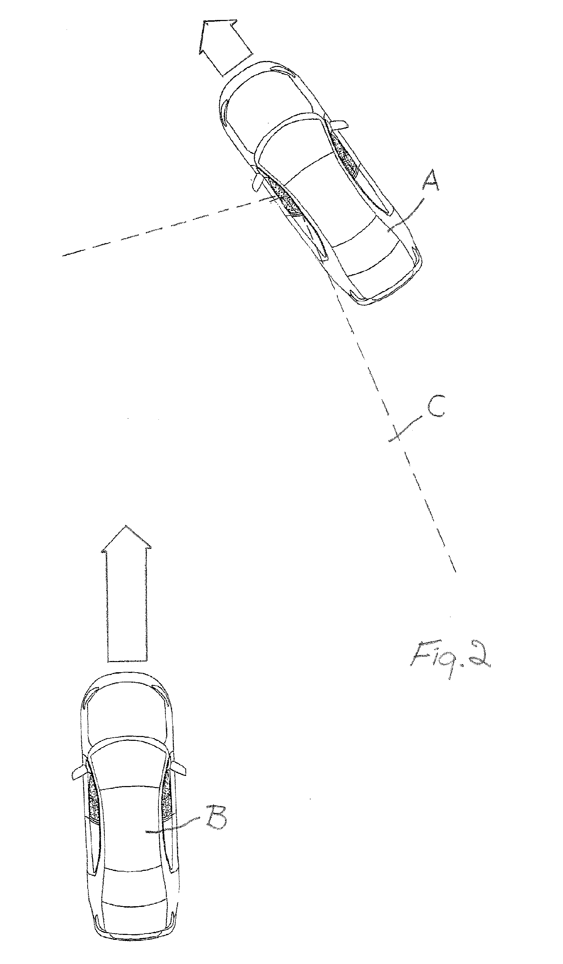

In Fig. 2-5, various examples of situations where the brake assist system according to the present invention is useful, are presented.

Accordingly, Fig. 2 illustrates the situation where the vehicle A is making a left turn while another road user B at high speed is about to overtake the vehicle A. Since the vehicle A is provided with a brake assist system according to the present invention, the monitoring area C of a left sensor of the monitoring means of said brake assist system being illustrated in Fig. 2, the system will be activated and a collision with the road user B will be avoided.

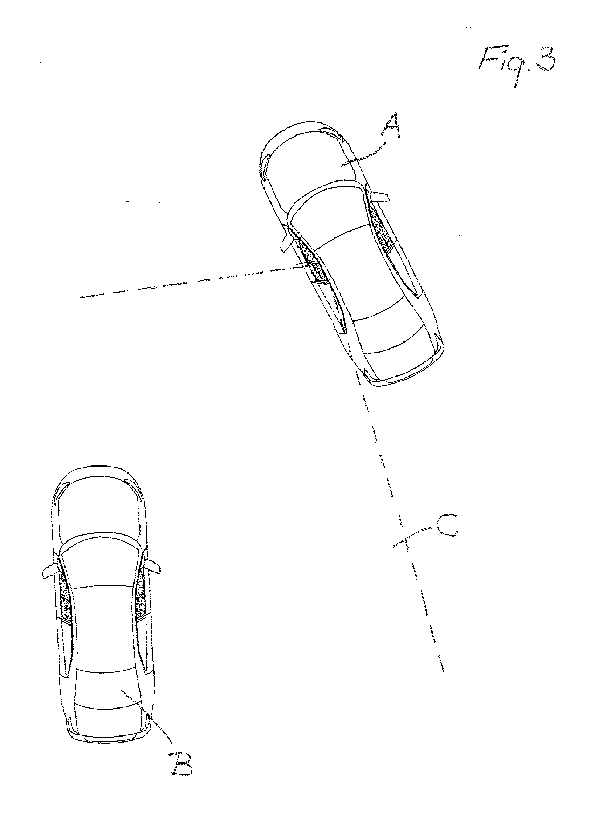

Fig. 3 illustrates the situation where the vehicle A is making a left turn while another road user B in the blind spot for the driver of vehicle A is about to overtake vehicle A. Since the vehicle A is provided with a brake assist system according to the present invention, the monitoring area C of a left sensor of the monitoring means of said brake assist system being illustrated in Fig. 3, the system will be activated and a collision with the road user B will be avoided.

Fig. 4 illustrates the situation where the vehicle A is making a left turn and another oncoming road user B will collide with the vehicle A if the driver thereof continues the left turn. Since the vehicle A is provided with a brake assist system according to the present invention, the monitoring area C of a front sensor of the monitoring means of said brake assist system being illustrated in Fig. 4, the system will be activated and a collision with the road user B will be avoided.

Fig. 5 finally, illustrates the situation where the vehicle A is making a left turn and is about to cross a cycle track D while other road users B on the cycle track approach the vehicle from behind as well as from the front. Since the vehicle A is provided with a brake assist system according to the present invention, the monitoring areas C1 and C2 of a left sensor and a front sensor of the monitoring means of said brake assist system being illustrated in Fig. 5, the system will be activated and a collision with the road users B will be avoided.

Thus, in all these situations, the brake assist system of the present invention activates the brakes of the vehicle A in order to avoid a collision with the other road user B or, if a collision can not be avoided, to mitigate the collision.

As already stated, and illustrated in Fig. 4 and 5, activation of different sensors and of more than one sensor, if provided, is possible for detecting other road users B. Accordingly, as illustrated in Fig. 4, a forwardly directed sensor, e.g. a camera, possibly in combination with a forwardly directed radar/lidar, is used instead of e.g. a blind-spot sensor as in Fig. 2 and 3 for detecting another road user B, and in Fig. 5, a blind-spot sensor is used together with a camera for detecting other road users B.

As already stated, detection of other road users B may also be carried through by wireless communication between the monitoring means 1 and the infrastructure or the other road users.

## Claims

1. Method for automatic braking of a vehicle (A) in order to avoid collision with road users (B) in adjacent lanes, **characterized by**
monitoring adjacent lanes of a road for detecting the relative approach of road users (B) in said adjacent lanes to said vehicle (A), and providing a first signal indicative thereof; detecting a left or right hand turn of the vehicle (A) and providing a second signal indicative thereof;
calculating, in response to said first and second signals, if a collision with an approaching road user (B) is imminent, and providing a third signal indicative thereof; and
activating, in response to the third signal, the brakes of the vehicle (A) such that the vehicle can pass behind said road user (B), or such that the vehicle is brought to a complete stop to avoid a collision or the collision is mitigated.

2. Method according to claim 1, **characterized by** estimating, when calculating if a collision with an approaching road user (B) is imminent, that the collision can not be avoided by a steering manoeuvre, and providing the third signal indicative thereof.

3. Method according to claim 1 or 2, **characterized by** estimating, when calculating that a collision with an approaching road user (B) is imminent, the extent of activation of the brakes of the vehicle (A) and providing a signal indicative thereof.

4. Method according to claim 3, **characterized by** controlling the activation of the brakes of the vehicle (A) dependent on the estimated extent of activation of said brakes.

5. Method according to any one of claims 1-4, **characterized by** estimating, when calculating that a collision with an approaching road user (B) is imminent, which brakes to be activated, and providing a signal indicative thereof.

6. Method according to claim 5, **characterized by** activating the brakes on at least one wheel on the left side of the vehicle (A) and on at least one wheel on the right side of the vehicle.

7. Brake assist system in a vehicle (A) for automatic braking of the vehicle in order to avoid collision with road users (B) in adjacent lanes, **characterized in that** said brake assistant system comprises
a monitoring means (1) which is configured for monitoring adjacent lanes of a road for detecting the relative approach of road users (B) in said adjacent lanes to said vehicle (A), and providing a first signal indicative thereof;
a detecting means (4) which is configured for detecting a left or right hand turn of the vehicle (A) and providing a second signal indicative thereof;
a calculating means (2) which is operatively coupled to said monitoring means (1) and said detecting means (4) for calculating, in response to said first and second signals, if a collision with an approaching road user (B) is imminent, and providing a third signal indicative thereof; and
a control means (6) which is operatively connected to said calculating means (2) for activating, in response to the third signal, the brakes of the vehicle (A) such that the vehicle can pass behind said road user (B), or such that the vehicle is brought to a complete stop to avoid a collision or the collision is mitigated.

8. Brake assist system according to claim 7, **characterized in that** the calculating means (2) is configured for estimating, when calculating if a collision with the approaching road user (B) is imminent, that the collision can not be avoided by a steering manoeuvre, and providing the third signal indicative thereof.

9. Brake assist system according to claim 7 or 8, **characterized in that** the calculating means (2) is configured for estimating, when calculating that a collision with the approaching road user (B) is imminent, the extent of activation of the brakes of the vehicle (A) and providing a signal indicative thereof to the control means (6).

10. Brake assist system according to claim 9, **characterized in that** the control means (6) is configured for controlling, based on the signal from the calculating means (2), the extent of activation of the brakes of the vehicle (A).

11. Brake assist system according to any one of claims 7-10, **characterized in that** the calculating means (2) is configured for estimating, when calculating that a collision with the approaching road user (B) is imminent, which brakes to be activated, and providing a signal indicative thereof.

12. Brake assist system according to claim 11, **characterized in that** the control means (6) is configured for activating, based on the signal from the calculating means (2), the brakes on at least one wheel on the left side of the vehicle (A) and on at least one wheel on the right side of the vehicle.

13. Brake assist system according to any one of claims 7-12, **characterized in that** the detecting means (4) comprises at least one sensor which is configured for detecting steering wheel movements and/or turns of one or both front wheels of the vehicle (A).

14. Brake assist system according to any one of claims 7-13, **characterized in that** the detecting means (4) comprises at least one gyro device which is configured for detecting steering wheel movements and/or turns of one or both front wheels of the vehicle (A).

15. Brake assist system according to any one of claims 7-14, **characterized in that** the monitoring means (1) comprises at least one sensor utilizing electromagnetic radiation.

16. Brake assist system according to any one of claims 7-15, **characterized in that** the monitoring means (1) comprises at least one sensor utilizing electromagnetic radiation on each side of the vehicle (A).

17. Brake assist system according to any one of claims 7-16, **characterized in that** the monitoring means (1) comprises at least one camera.

18. Brake assist system according to any one of claims 7-17, **characterized in that** the monitoring means (1) is configured for wireless communication with approaching road users (B).
